# EUROPEAN PATENT APPLICATION

(11) **EP 3 758 263 A1**
(43) Date of publication of application: **30.12.2020**
(21) Application number: 19183181.7
(22) Date of filing: 28.06.2019
(51) Int. Cl.: H04L 1/00

(54) **COMMUNICATION SYSTEM OF WHICH THE PRECISION IS CONFIGURABLE, AND METHOD**

(71) Applicant: Nokia Solutions and Networks Oy, 02610 Espoo (FI)
(72) Inventor: Jivanescu, Mihaela, 2018 Antwerpen (BE); Dev Gomony, Manil, 2018 Antwerpen (BE)
(74) Representative: IP HILLS NV

(57) **Abstract**

Example embodiments describe a communication system (100) comprising digital circuitry (120-125, 130-135) configured to process digital communication signals (140, 160) with a configurable numerical precision, and comprising a controller (101) comprising at least one processor and at least one memory including computer program code, the at least one memory and computer program code configured to i) obtain channel information indicative for a performance of a communication channel (110) transporting the communication signals, and ii) adapt the numerical precision of the digital circuitry based on the obtained information.

## Description

### Technical Field

Various example embodiments relate to digital circuitry for processing of digital communication signals within a communication system.

### Background

A communication system comprises digital circuitry for the processing of digital communication signals in the time and/or frequency domain. The digital circuitry is then configured to perform physical layer functions by the execution of various digital computations. Such digital circuitry may be used to implement both wired and wireless point-to-point and point-to-multipoint communication protocols.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of embodiments of the invention to provide in a solution for such digital circuitry that optimizes power consumption while providing the required performance.

This object is achieved, according to a first example aspect of the present disclosure, by the communication system as defined by claim 1 comprising digital circuitry configured to process digital communication signals with a configurable numerical precision, and comprising a controller comprising at least one processor and at least one memory including computer program code, the at least one memory and computer program code configured to obtain channel information indicative for a performance of a communication channel transporting the communication signals, and to adapt the numerical precision of the digital circuitry based on the obtained information.

In other words, the precision of one or more computations within the digital circuitry that process the communications signals is based on the channel conditions, i.e. the varying conditions of the communication channel having a direct impact on the performance of the communication channel. The highest numerical precision for the digital circuitry typically defines a scenario with the highest performing communication channel, e.g. an ideal channel. Less-performing communication channels will typically require less numerical precision because of the increased noise and/or the increased signal attenuation. Hence, under normal operation, this highest numerical precision is nearly never required for achieving a certain performance requirement and, thus, the circuitry is overprovisioned. By lowering the numerical precision according to the performance of the communication channel, the part of the circuitry for achieving the higher precision does not need to be active and, hence, a considerable power saving is achieved while still achieving the required performance. The configuring of the precision may be achieved in different ways. The digital circuitry may be configured to actively switch between different precisions by turning parts of the digital circuitry on or off. The digital circuitry may also be configured to mask the least significant bits of the digital communication signals, i.e. set the least significant bits to zero. This way, parts of the digital circuitry will be activated less and, hence, consume less power.

The achieved power savings will thus be much better compared with defining a fixed numerical precision based on a worst-case scenario. The savings will also be larger compared with defining the numerical precision according to a set of use-case scenarios because these are still based on the implementation of a set of extreme corner cases. Moreover, by defining the numerical precision based on the performance of the communication channel, the tuning is based on the actual algorithmic performance.

According to example embodiments, the adapting is further performed such that a lowest numeral precision is obtained while fulfilling a requirement for the performance of the communication channel. This requirement may for example be set by or derived from the communication protocol when it operates according to a certain mode. By comparing the obtained channel information with the requirement, the numerical precision is set to its lowest possible value.

Such adapting may further be performed by iteratively adapting the numerical precision and checking whether the requirement is fulfilled. Such adapting may also be performed by a machine learning model configured to learn the performance of the communication channel associated with an adapted numerical precision and to adapt the numerical precision accordingly.

According to example embodiments, the digital circuitry comprises a digital transmission pipeline configured to process the digital communication signals for transmission over the communication channel and/or comprises a digital reception pipeline configured to process the digital communication signals received over the communication channel.

The digital circuitry may then comprise one or more modules or pipeline stages within the transmission or reception pipeline such as for example a vectoring processor, a fast fourier transform, FFT, module, an inverse FFT, IFFT, module, circuitry for performing digital multitone modulation demodulation and channel equalization on the digital communication signals, and circuitry for performing physical layer functions on the digital communication signals.

According to example embodiments, the controller is further configured to obtain the channel information from a remote receiver, for example when adapting the numerical precision within the digital transmission pipeline.

The communication system may also relate to a communication system having a vectoring processor. In such a case, the channel information may also be obtained from a vectoring controller controlling such a vectoring processor.

Examples of the channel information are a slicing error or a Digital Fourier Transform, DFT, receive sample that are available from the vectoring feedback channel in vectored digital subscriber line, DSL, G.fast or G.mgfast communication systems. Other examples are the amount of code violations, error performance counters, such as the mean time between error, MTBE, counter or the number of severely errored seconds, SES, counter, or noise measurements, such as Signal to Noise Ratio, SNR, measurements.

According to example embodiments, when the digital circuitry is performing digital multitone modulation, the numerical precision is adapted differently for different sets of one or more tones of the digital communication signals, i.e. the numerical precision is set differently for different tones.

The adapting may further be performed during an initialization phase of the communication system; periodically, during a joining of a remote communication device, and/or during a leaving of a remote communication device.

The communication system may further be comprised in a distribution point unit, DPU, or in a DSL access multiplexer, DSLAM, or in a customer premises equipment, CPE, or in a mobile/wireless base station, or in a mobile/wireless user terminal.

According to a further example aspect a method is disclosed for performing the steps of the controller: obtaining channel information indicative for a performance of a communication channel (110) transporting communication signals, and adapting the numerical precision of digital circuitry based on the obtained information; the digital circuitry configured to process the digital communication signals (140, 160) with a configurable numerical precision.

According to a further example aspect a computer program product is disclosed comprising computer-executable instructions for performing the following steps when the program is run on a computer: obtaining channel information indicative for a performance of a communication channel transporting communication signals, and adapting the numerical precision of digital circuitry based on the obtained information; the digital circuitry configured to process the digital communication signals with a configurable numerical precision.

According to a further example aspect a readable storage medium is disclosed comprising computer-executable instructions for performing the following steps when the program is run on a computer: obtaining channel information indicative for a performance of a communication channel transporting communication signals, and adapting the numerical precision of digital circuitry based on the obtained information; the digital circuitry configured to process the digital communication signals with a configurable numerical precision.

### Brief Description of the Drawings

Some example embodiments will now be described with reference to the accompanying drawings.
Fig. 1 shows an example embodiment of a communication system with a digital transmission and reception pipeline;
Fig. 2 shows an example embodiment of steps performed by a controller for adapting the numerical precision of digital circuitry in a communication system;
Fig. 3 shows a further example embodiment of steps performed by a controller for adapting the numerical precision of digital circuitry in a communication system;
Fig. 4 shows a further example embodiment of steps performed by a controller for adapting the numerical precision of digital circuitry in a communication system;
Fig. 5 shows a further example embodiment of steps performed by a controller for adapting the numerical precision of digital circuitry in a communication system;
Fig. 6 shows a further example embodiment of a simulation model used for describing different aspects of example embodiments;
Fig. 7 shows a simulation results obtained from the simulation model of Fig. 6; and
Fig. 8 shows an example embodiment of a suitable computing system for performing one or several steps in embodiments of the invention.

### Detailed Description of Embodiment(s)

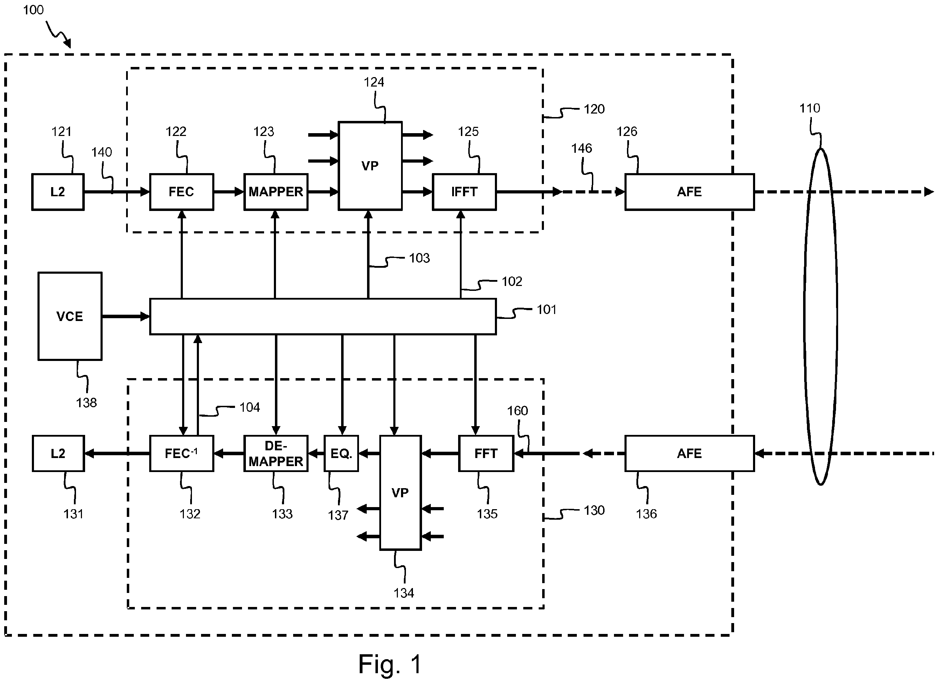

Fig. 1 illustrates a communication system 100 according to an example embodiment. Communication system 100 communicates with remote communication nodes by transmitting and receiving communication signals over a communication channel 110 established over a wired or wireless communication medium. The communication system 100 of Fig. 1 operates according to digital multi-tone, DMT, modulation or orthogonal frequency division multiplexing, OFDM, techniques.

To this respect, system 100 comprises a digital transmission pipeline 120 that performs various computations on digital communication signals 140 received from upper networking layers, i.e. from an L2 networking layer 121. The processed digital communication signals, typical baseband signals expressed by binary time domain in-phase and quadrature-phase values 146 are then converted to analogue values. The analogue values are then further processed in analogue front-end 126 before transmitting the communication signals over the communication channel 110. Digital transmission pipeline 120 may comprise various processing blocks for performing various physical layer related operations on the received digital communication signals. Pipeline 120 may comprise a forward error coder, FEC, 122 for adding redundancy to the signals 140 to improve error resilience. Pipeline 120 may comprise a constellation mapper 123 for mapping of the binary payload data onto the different tones within the frequency spectrum of the communication channel. Pipeline 120 may further comprise a vectoring processor 124 for pre-compensation of the communication signals against disturbances by cross-talk signals from other communication channels. To this end, vectoring processor 124 takes the communication signals that will be transmitted simultaneously by different transmission pipelines and performs the pre-coding for all those communication signals. The signals from and to the other transmission pipelines are illustrates by the grey arrows. For performing the pre-coding, the vector processor is configured with precoding coefficients that are derived and supplied by a vector control entity 138. Pipeline 120 also comprises an IFFT circuitry 125 for conversion of the frequency domain digital communication signals to a time domain representation.

Similarly, system 100 comprises a digital reception pipeline 130 that performs various computations on digital communication signals 160 received from analogue front end, AFE, 136. AFE 136 receives analogue communication signals from communication channel 110, e.g. from a remote networking node, processes them in the analogue domain and then converts them to a digital representation, e.g. to a series or in-phase and quadrature-phase digital values. Digital reception pipeline 130 may comprise a FFT circuitry 135 for converting the time domain digital signal 160 to a frequency domain representation. Digital reception pipeline 130 may further comprise a vectoring processor 134 for removal of unwanted disturber signals from the received digital communication signals. To this end, vectoring processor 134 may be provided within the same circuitry as vectoring processor 124 that now performs a post-compensation for removal of cross-talk signals from other communication channels. Vectoring processor 134 takes the communication signals that are received simultaneously by different reception pipelines and performs the post-coding for all those communication signals together. The signals from and to the other reception pipelines are illustrates by the grey arrows. For performing the post-coding, the vector processor is configured with post-coding coefficients that are derived and supplied by the vector control entity 138. Digital reception pipeline 130 may further comprise an equalizer 137 to mitigate distortion induced by the communication channel 110 itself on the communication signals 160. Digital reception pipeline 130 may further comprise a de-mapper 133 for conversion of the tone values to an estimate of the binary values modulated onto these tones. Digital reception pipeline 130 may further comprise an error decoder 132 for resolving binary errors from redundant binary data carried by the digital communication signals. The resolved binary payload data may then be forwarded to a higher level 2, L2, networking layer 131 for further processing.

One or more of the circuitries 122-125, 132-135, 137, 138 have a configurable numerical precision, i.e. the amount of bits used for the representation of the digital communication signals 140, 160 within the respective circuitries are configurable. Configuring the numerical precision may be performed by actively switching computational parts of the circuitries on or off. For example, an adder, multiplier or multiplexer may be configurable to operate on values between 32 bits and 64 bits. When configuring less numerical precision, more parts will be switched off and, hence, the respective circuitry will consume less power. Configuring the numerical precision may also be performed by masking the digital communication signals, e.g. by forcing a configurable number of least significant bits, LSBs, to zero. This will have the effect that less circuitry will be activated during processing and, again, less power is consumed. Preferably, the numerical precision is configurable per tone within the communication bandwidth or per group of tones. In other words, the numerical precision for calculations on one tone or one group of tones can be configured differently than the numerical precision for calculations on another tone or another group of tones. The different numerical precisions of the respective digital circuitries are configurable by a controller 101 as illustrated by the outgoing arrow 102. By the configurable numerical precision of the various circuitries, a trade-off is obtained between the accuracy and power consumption of the respective circuitries, i.e. a lower numerical precision results in a lower power consumption and vice versa. The maximum numerical precision of the circuitries may be determined by the performance requirements for the highest performing communication channel, e.g. an ideal channel. Less-performing communication channels will typically require less numerical precision because of the increased noise and/or the increased signal attenuation.

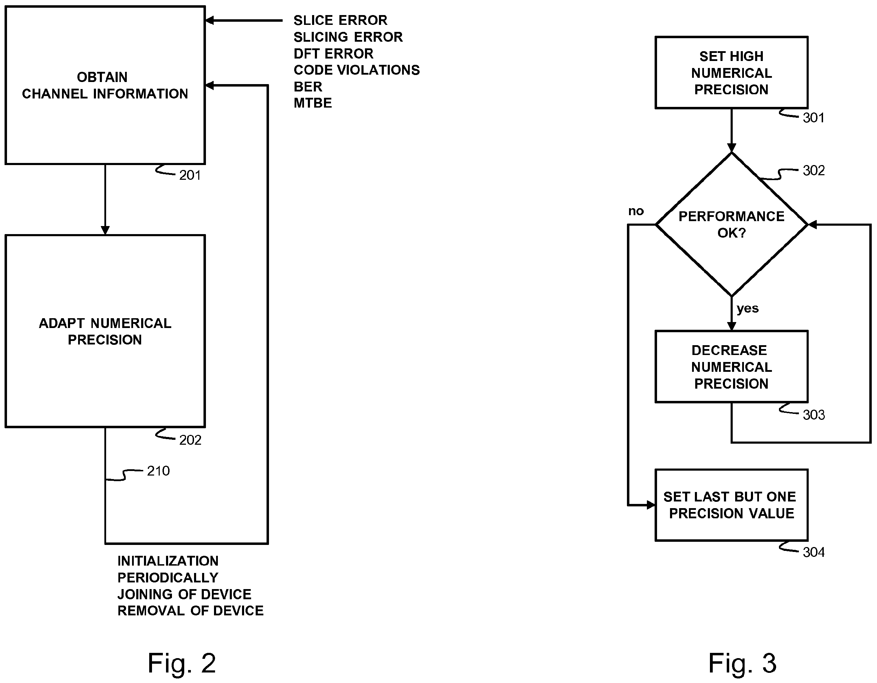

The numerical precision of the various blocks may be set in different ways by controller 101 and is illustrated with reference to Fig. 2 to 5. Fig. 2 illustrates steps performed by controller 101 to adapt the numerical precision according to an example embodiment. In a first step 201, the controller 101 obtains channel information indicative for a performance of the communication channel 110. Such information may be provided by the VCE 138 which obtains such information when performing the channel estimation of the communication channel 110. These estimations are then used for calculating the pre-coding and post-coding matrices for use in the respective vector processors 124, 134. For configuring the numerical precision of the transmit pipeline 120 a feedback mechanism from the receiver side is needed. To this end, in a DSL communication system the DSL vectoring channel may be used. More specifically, the complex normalized error samples and/or the DFT receive samples may be used as a performance metric for the communication channel 110. The complex normalized error sample is also referred to as the slicing error or error vector magnitude. Alternatively, noise measurements may be performed by comparison of transmitted and received digital communication signals. This way, the SNR of received signals can be derived. For the receive chain 130, the channel information may also be obtained indirectly, e.g. by a bit error rate, BER, an amount of code violations, or the mean time between errors, MTBE, as available from the decoder 132. When the controller 101 has obtained the channel information, it proceeds to step 202 and sets the numerical precision of the digital circuitries accordingly. Steps 201-202 may be performed or re-performed upon different events. The numerical precision may for example be adapted upon initialization of the system 100. Thereafter, the precision may be adapted periodically, and/or when a device or user is added to the communication system, and/or when a device or user is removed from the communication system. The numerical precision may also be adapted when there is a change in the communication channel, for example by detecting a change in the bit loading or when detecting a change in the error rate as reported 104 by the decoder 132.

The above steps may be performed for configuring the various stages of the digital transmit pipeline 120 and/or the digital receipt pipeline 130. Communication system may further comprise a plurality of transmit and receipt pipelines for providing communication over different communication channels. Communication system 100 may for example correspond to a point-to-multipoint access node that provides broadband network access to a plurality of subscribers. For example, communication system 100 may be provided in a DSL or G.fast or G.mgfast communication system. The system 100 may then be provided in an access node such as in a distribution point unit, DPU, or in a DSL access multiplexer, DSLAM. Communication system 100 may also be provided in a terminal node such as a CPE. In this case, the CPE will not have vector processor 124, 134 and VCE 130 because the vector processing is performed in the DSLAM or DPU. Communication system 100 may also be provided in a fixed or mobile/wireless communication system, e.g. in a cellular base station, in a wireless access point or in a mobile communication device. The communication system 100 may be applied to different wireless communication standards such as IEEE 802.11, Bluetooth, 3G, 4G, LTE, and 5G.

Fig. 3 illustrates further steps performed by controller 101 for the adapting of the numerical precision according to step 202 of Fig. 2. According to this example embodiment, the numerical precision of circuitries is first set at a high value, e.g. the highest, in step 301. Then the controller 101 proceeds to step 302 and verifies whether the performance of the communication channel is still satisfactory, e.g. by receiving feedback 103 from a remote receiver for the digital transmit pipeline 120 or by receiving the feedback 104 from the error decoder 132 from the receipt digital pipeline 130. As long as the measured performance lays within a certain predetermined performance requirement, the controller 101 proceeds to step 303 and decreases the numerical precision of the respective digital circuitries. The performance requirement may be set and verified in different ways depending on how the channels conditions are determined. For example, when using the BER, the BER must be below a certain threshold value, e.g. below 10⁻⁷. For example, when using the MTBE, the MTBE must be greater than a certain threshold value, e.g. more than a few hours or minutes. A threshold value may also be dynamic. This may be done by first measuring a reference value and then determining a threshold based on this reference value. For example, a reference noise power is first measured for the highest numerical precision and then the threshold is set proportional to this reference, for instance twice the reference value. One example of the noise power is the squared magnitude of the slicer error. When the performance is no longer within the required performance, then the controller proceeds to step 304 and sets the precision to the latest precision for which the performance requirement was met.

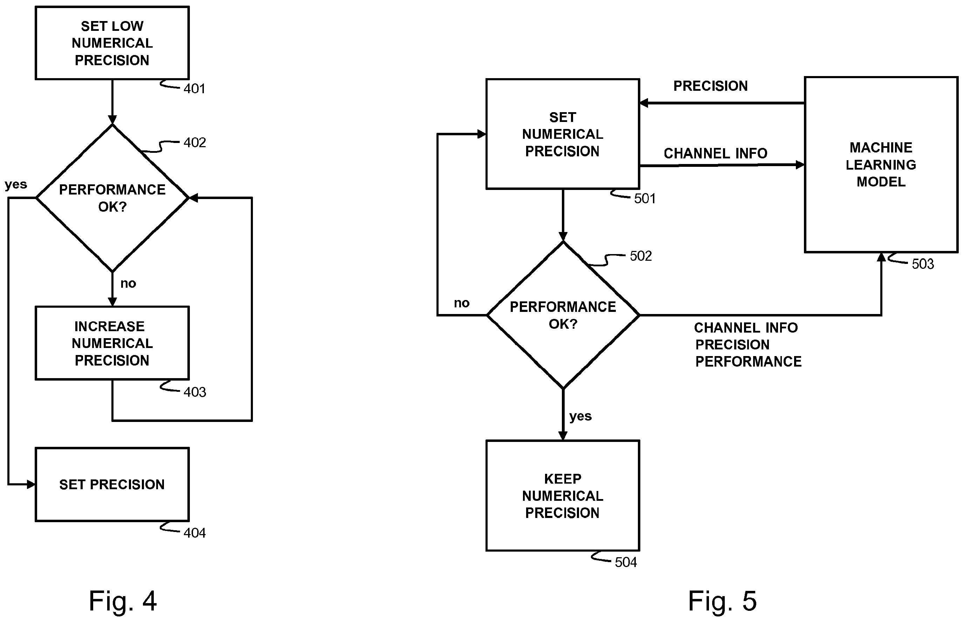

Fig. 4 illustrates further steps performed by controller 101 for the adapting of the numerical precision according to step 202 of Fig. 2. According to this example embodiment, the numerical precision of circuitries is first set to a low value, in step 401. Then the controller 101 proceeds to step 402 and verifies whether the performance of the communication channel is within the performance requirement, similar as described with reference to Fig. 3. As long as the measured performance does not lay within the predetermined performance requirement, the controller 101 proceeds to step 403 and increases the numerical precision of the respective digital circuitries. When the performance is within the required performance, then the controller proceeds to step 404 and keeps the precision at its latest value.

Fig. 5 illustrates further steps performed by controller 101 for the adapting of the numerical precision according to step 202 of Fig. 2. To this respect, the controller 101 comprises a machine learning model 503. In a first step 501, the controller 101 provides the obtained channel information to the machine learning model 503 which, on its turn, provides the precision configuration for the different circuitries. Then, the controller proceeds to step 502 and verifies whether the performance requirement is met in a similar way as in step 402. If the requirement is not met, then the controller returns to step 501. If the requirement is met, the controller proceeds to step 504 and keeps the configured numerical precision. Further, the measured performance is fed back to the machine learning model together with the associated channel information and precision. By this feedback, the machine learning model is further trained. When the machine learning model 503 is completely trained, training steps 502 and 504 are no longer needed.

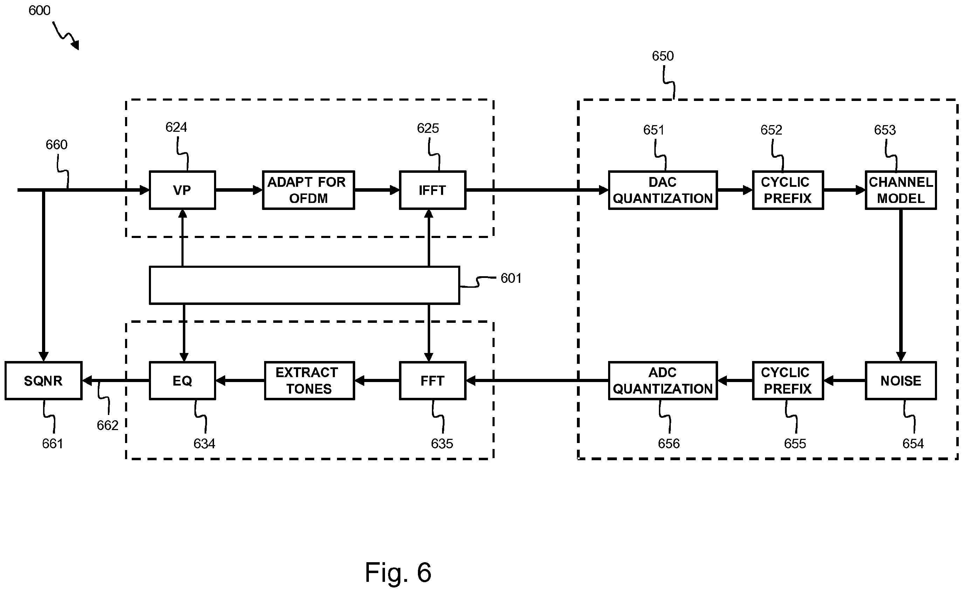

Fig. 6 illustrates a simulation model 600 wherein a vectoring processor 624 and IFFT 625 of a digital transmission pipeline are provided with a configurable numerical precision. In this example, the highest simulated precision is the double-precision floating point format, i.e. 64 bits. The vectoring processor is provided with generated I and Q values 660 that serve as the input of the simulation model 600. The model 600 further comprises an emulated analogue front end that adds the DAC quantization noise 651, then adds the cyclic prefix 652, adds the attenuations and disturbances from the communication channel 653, adds the generated noise 654, removes the cyclic prefix 655, and adds the ADC quantization noise 656. Then, the simulated signals are provided to a digital receive pipeline at a receiving end having a FFT 635 and equalizer 634. The SQNR block 661 then compares the transmitted values 660 with the received values 662 by calculating the signal to quantization noise ratio, SQNR. Using this simulation model 600, the impact of the configurable numerical precisions and numeric formats of the VP 624, IFFT 625,FFT 635 and equalizer 634 may be evaluated.

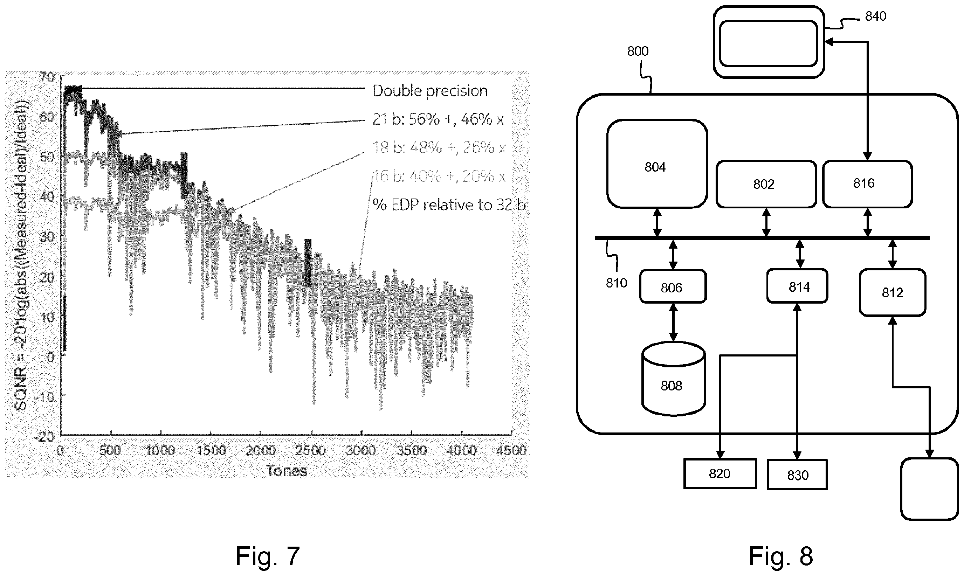

Fig. 7 shows a plot of the SQNR as a function of the tone index for different configured precisions as obtained by the simulation model 600. When the DAC and ADC quantization noise was deactivated, SQNRs above 300dB are obtained. The limitation of the SQNR in the double precision curve is therefore caused by the DAC and ADC quantization noise. The tilt in SQNR for double precision is caused by the attenuation in the communication channel. The results are very good when doing all computations in 20 bits precision. There is a small decrease in signal quality for very low tones, but that loss disappears when using 21 bits precision. For lower number of bits, the limited precision SQNR deviates from the double precision reference but only on lower frequency tones and not for high frequency ones. For tone indexes 1 to 1300 computations can be done using 20 bits, up to tone 2500 the precision may be lowered to 17 bits and for a tone index above 2500 15 bits is enough. The legend of Fig. 7 further shows the energy-delay product, EDP, for both an adder '+' and a multiplier 'x' relative to the EDP of the 32 bits fixed point variant.

The results of Fig. 7 were obtained by configuring the same numerical precision in the VP, IFFT, FFT and EQ modules. Further gains may be achieved by configuring different precisions for the different modules or even for different subcircuits in the modules. For example, different stages of the (I)FFT modules may use different precision without causing a visible degradation. The same mechanism may also be used when users require lower sustained rates and, thus, the number of bits loaded on the lower-index tones is reduced. For the case illustrated by Fig. 7, when the bit loading is further reduced to require only 35 dB for tones 1 to 2500, one can reduce the precision of the operations to 16 bits over the whole spectrum, i.e. for all tones, thereby further saving power.

For further evaluations purpose, a variable precision fixed arithmetical operator was synthesized in a 28nm technology. When ranging from 32 bits to 21 bits adders and multipliers, gains of 44% to 54% in EDP were observed. When considering the energy-delay-area product, the observed gains are from 60% to 80%. Savings of 40% in energy-delay-area product for both a floating point adder and multiplier may be achieved by decreasing from 32 bits fixed point to 22 bits fixed point..

Fig. 8 shows a suitable computing system 800 enabling to implement embodiments of the controller 101. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 500 could thus correspond to the controller 101.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A communication system (100) comprising digital circuitry (120-125, 130-135) configured to process digital communication signals (140, 160) with a configurable numerical precision, and comprising a controller (101) comprising at least one processor and at least one memory including computer program code, the at least one memory and computer program code configured to:
- obtain (201) channel information indicative for a performance of a communication channel (110) transporting the communication signals,
- adapt (202) the numerical precision of the digital circuitry based on the obtained information.

2. The communication system (100) according to claim 1 wherein the adapting is performed such that a lowest numeral precision is obtained while fulfilling (302, 402, 502) a requirement for the performance of the communication channel.

3. The communication system (100) according to claim 2 wherein the adapting comprises:
- iteratively adapting (303, 403) the numerical precision and checking whether the requirement is fulfilled.

4. The communication system (100) according to claim 1 wherein the channel information comprises at least one of:
- vectoring channel control information;
- noise measurements;
- an amount of code violations; and
- an error performance counter.

5. The communication system (100) according to claim 1 wherein the digital circuitry comprises a digital transmission pipeline (120) configured to process the digital communication signals (140) for transmission over the communication channel (110).

6. The communication system (100) according to claim 1 wherein the digital circuitry comprises a digital reception pipeline (130) configured to process the digital communication signals (160) received over the communication channel (110).

7. The communication system (100) according to claim 1 wherein the digital circuitry comprises a vectoring processor (124, 134) and a vectoring control entity (138).

8. The communication system (100) according to claim 7 wherein the controller (101) is further configured to obtain (103) the channel information from the vectoring control entity (138).

9. The communication system (100) according to claim 1 wherein the digital circuitry further comprises a fast fourier transform, FFT, module (135) and/or inverse FFT, IFFT, module (125).

10. The communication system (100) according to claim 1 wherein digital circuitry comprises circuitry for performing physical layer functions on the digital communication signals.

11. The communication system (100) according to claim 1 wherein the controller is further configured to adapt the numerical precision differently for different sets of one or more tones of the digital communication signals.

12. The communication system (100) according to claim 1 wherein the controller (101) is further configured to perform the adapting during an initialization phase; periodically, and/or during a joining of a remote communication device, and/or during a leaving of a remote communication device, and/or when a performance of the communication channel changes.

13. The communication system (100) according to claim 1 wherein the controller comprises a machine learning model (503) configured to learn the performance of the communication channel associated with an adapted numerical precision and to adapt the numerical precision accordingly.

14. A distribution point unit, DPU, or a digital subscriber line access multiplexer, DSLAM, comprising the communication system according to claim 1.

15. Method comprising:
- obtaining (201) channel information indicative for a performance of a communication channel (110) transporting communication signals, and
- adapting (202) the numerical precision of digital circuitry based on the obtained information; the digital circuitry configured to process the digital communication signals (140, 160) with a configurable numerical precision.
